# EUROPEAN PATENT APPLICATION

(11) **EP 4 191 976 A1**
(43) Date of publication of application: **07.06.2023**
(21) Application number: 21306715.0
(22) Date of filing: 06.12.2021
(51) Int. Cl.: H04L 67/1097, H04N 21/4627

(54) **METHODS AND DEVICES FOR CONTENT DISTRIBUTION**

(71) Applicant: WYPLAY, 13190 Allauch (FR)
(72) Inventor: AIT GHERBI, Massinissa, 95310 Saint-Ouen-l'Aumône (FR); POUDADE, Julien, 13190 Allauch (FR)
(74) Representative: Novagraaf Technologies

(57) **Abstract**

A method carried out by a device (202, 203, 204) configured to function as a node in a distributed storage network (201) for distributed content storage, said network comprising a plurality of nodes, said device comprising at least one processor and at least one memory with code which when executed by said at least one processor causes the device to carry out the method, said method comprising:
- obtaining (S701, S702) a list of content offers from a blockchain (205);
- selecting (703) a given content for storage by said device among contents identified in said list;
- obtaining said given content from a node of the distributed storage network and storing said content (S707);
- sending (S705) a message to said blockchain for updating a registry with an information indicative that the device stores said given content for the purpose of obtention of said content by at least one user device (210, 211, 212).

The disclosure also concerns a device for carrying out the method, as well as method carried out by a blockchain node, and a blockchain node.

## Description

### Technical Field

The present disclosure relates to the distribution of content, such as but not limited to an audio and/or video content to an end-user device, through nodes of a distributed storage network and in cooperation with a blockchain.

### Background

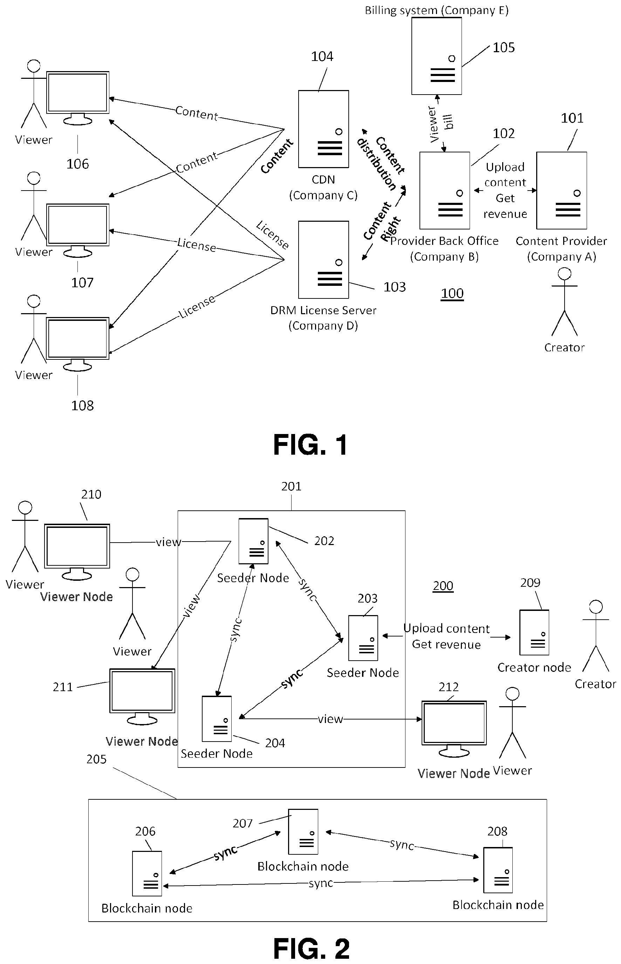

Fig. 1 is a high-level diagram of a content distribution network, CDN, architecture in which a content provider 101 provides content for distribution to rendering devices 106 to 108. Typically, the content is first uploaded to a back-office server 102, which interacts with:
- a centralized digital rights management server 103 to which the back-office server 102 communicates content rights associated with the content, and which provides licenses for viewing the content to the rendering devices 106 to 108;
- a centralized content distribution server 104 which obtains the content from the back-office server 102 and will in effect be the server from which the rendering devices will obtain the content;
- a centralized billing system server 105 for billing the viewers or owners of the rendering devices 106 to 108 as a function of the individual licenses.

The different devices 101 to 105 represent five intermediaries in the chain of content distribution between a content provider and the viewers, which impacts the cost of the content distribution. It is desirable to have a content distribution system which permits transparent information sharing and flexible content storage, while still providing a secure distribution environment and maintaining reasonable resource cost.

### Summary

The scope of protection sought for various embodiments of the invention is set out by the independent claims. The various embodiments / examples, aspects and features, if any, described in this specification that do not fall under the scope of the independent claims are to be interpreted as examples useful for understanding various embodiments of the invention.

According to a first aspect, a method is described, wherein this method is carried out by a device configured to function as a node in a distributed storage network comprising a plurality of nodes for distributed content storage, said device comprising at least one processor and at least one memory with code which when executed by said at least one processor causes the device to carry out the method, said method comprising:
- obtaining a list of content offers from a blockchain;
- selecting a given content for storage by said device among contents identified in said list;
- obtaining said given content from a node of the distributed storage network and storing said content;
- sending a message to said blockchain for updating a registry with an information indicative that the device stores said given content for the purpose of obtention of said content by at least one user device.

The above method is used in a system in which two networks interact: a network for distributed storage of content and a blockchain network for serving as a marketplace for content offers. Devices of the distributed storage network obtain content for subsequent distribution to user devices, based on content offers managed through a blockchain.

Distributed content storage allows avoiding a large dedicated content distribution network and its high maintenance cost, and also provides redundancy in case a storage node fails.

According to certain embodiments, the blockchain acts as a safe and distributed repository for content offers; e.g. offered by content providers through appropriate devices. The blockchain also maintains a registry indicating which storage nodes a user node can obtain a given content from. User devices thus only have the blockchain to go to in order to obtain the necessary information for data identifying potentially downloadable content and the identity of one or more storage nodes to obtain said content from. The combination of a blockchain and a distributed storage network is particularly advantageous because large data files typically associated with audio and/or video content are not stored in the blockchain, but in a separate distributed storage network. This reduces the resources required for the blockchain - such resources may be scarce and expensive. The blockchain is however used to securely store data necessary to obtain the content, such as available content offers and the list of nodes of the storage network proposing a given content. Moreover, a node of the storage network selects one (or more) content(s) for storage and registers itself as offering such content for download. This differs from a model where distributed storage is relied upon where storage nodes are used for content distribution without them being aware of this fact and/or without explicit authorization.

The blockchain and distributed storage network thus advantageously cooperate to carry out the functions including content storage and distribution. They can further cooperate to implement digital rights management and/or fee collection and reward distribution.

According to one embodiment, the distributed storage network is a peer-to-peer network.

According to an embodiment, the method further comprises
- receiving a request from a user device for obtaining said content;
   - verifying (S1002, S1003) with said blockchain whether said user device has a right to receive said content and in the affirmative, delivering said content to said user device.

According to certain embodiments, when a content request is received by a node of the storage network, the node first checks in the blockchain whether the requesting user node has the required rights. This adds a layer of security in the content distribution process. The check may for example may for example consist in verifying that a wallet associated with the user device and/or a user of the user device contains a token that was rightfully obtained from the content source. In addition , although this could be taken separately, a user device specific watermarking is performed before delivering the content. Since a content distributed to a user device bears a watermark specific to the user device, leaked content can easily be used to identify the leaking user device.

According to an embodiment, the method further comprises
- broadcasting a request for said given content to nodes of said storage network;
- obtaining a response from at least one node storing said content; and
- selecting one among said at least one node for obtaining said content.

According to an embodiment, the method further comprises
- selecting a first content among contents stored by said device
- obtaining the identity of a given node storing said first content from said blockchain;
- performing a check as to whether the first content is validly stored by said given node and in case it is determined that the check failed, registering a corresponding information in the blockchain.

According to an embodiment, performing a check comprises:
- sending a challenge concerning the first content to said given node;
- receiving a challenge response from said given node comprising a hash of said first content;
- comparing said received hash with a hash generated by said device based on the content stored by said device;
- determining that said check failed if the hashes are different.

According to an embodiment, the method further comprises
- receiving a request from another node of said storage network for responding to a challenge relative the validity of a content stored by said device;
- determining a response to said challenge and sending said response to the request.

According to an embodiment, determining a response comprises computing a hash of said content for which the challenge response is requested.

According to certain embodiments, a storage node can issue a challenge to another storage node to ensure that content data stored by a challenged storage node is valid - e.g. that it is the same content data as that stored by the challenging node. The storage node network thus performs an internal security check. Advantageously, a challenging node selects a node to be challenged on the basis of a content stored by the challenging node, which is also stored - or at least claimed to be stored - by the node to be challenged. While the content is not directly stored in the blockchain, these challenge checks provide an added layer with regard to content trustworthiness.

The result of the challenge, when negative, is recorded in the blockchain and may be relied upon to take necessary action by the blockchain, such as banning a storage node that offers corrupt or fake content, such as described below.

According to an embodiment, said device is a source device for a content other than said given content, said method further comprising registering an offer for said content other than said given content with said blockchain.

A second aspect concerns a device configured to function as a node in a storage network for distributed content storage, said network comprising a plurality of nodes, said node device comprising at least one processor and at least one memory with code which when executed by said at least one processor causes the device to carry out the method according to one of the above embodiments mentioned in relation with the first aspect.

A third aspect concerns a method carried out by a blockchain node device configured to cooperate with other blockchain nodes in a blockchain network comprising at least one processor and at least one memory with code which when executed by the at least one processor causes the blockchain node device to carry out the method, the method comprising:
- receiving an offer for a content from a content source;
- registering said offer with an identifier of said content in a first registry for storing offers for contents;
- in response to a request for available contents from a storage node device of a storage network for distributed content storage, providing a list of contents to said requesting storage node device based on said first registry;
- receiving a message from said storage node device for updating a second registry with an information indicative that the storage node device stores a given content of said list of contents for the purpose of obtention of said given content by at least one user device, wherein said second registry is configured to allow identification of one or more storage node devices for a single content.

According to an embodiment, the method further comprises
- receiving an information indicative of a failed check by a first storage node of the storage network storing a first content verifying that a second storage node of the storage network indicated in said second registry as storing said first content validly stores said first content;
- in response to the reception of the failed check information, determining based on a predetermined criterion whether to banish said second storage node and banishing said second storage node is said criterion is met.

According to an embodiment, said criterion consists in checking whether N failed checks have been received, with N being an integer equal or greater than 1.

A fourth aspect concerns a device configured to function as a blockchain network node in a blockchain network, said device comprising at least one processor and at least one memory with code which when executed by said at least one processor causes the device to carry out the method disclosed in connection with the third aspect above.

### Brief Description of the Figures

Some embodiments are now described, by way of example only, and with reference to the accompanying drawings, in which :
- FIG. 1 is a block diagram of a content distribution system destined to illustrate certain issues in prior art systems;
- FIG. 2 is a high level block diagram of a content distribution system architecture according to a non-limiting exemplary embodiment;
- FIG. 3 is a functional block diagram of a device which can be used to implement nodes described herein according to non-limiting exemplary embodiments;
- FIG. 4 is another high level block diagram of the general system architecture of figure 2;
- FIG. 5 is a schematic diagram of smart contracts according to a non-limiting exemplary embodiment;
- FIG. 6 is a double flowchart of a content offer creation process according to a non-limiting exemplary embodiment, seen from the point of view of a content source node on one hand and from a blockchain node or the blockchain on the other;
- FIG. 7 is a double flow chart of a content caching process in a peer-to-peer storage network of nodes according to a non-limiting exemplary embodiment, seen on one hand from the point of view of a node of the peer-to-peer network and from a blockchain node or the blockchain on the other;
- FIG. 8 is a triple flowchart of a challenge process among nodes of the peer-to-peer network according to a non-limiting exemplary embodiment, seen from the respective point of view of a challenging node, a challenged node and a blockchain node or the blockchain;
- FIG. 9 is a schematic diagram illustrating a key distribution according to a non-limiting exemplary embodiment.;
- FIG. 10 is a flowchart of a content watermarking process according to a non-limiting exemplary embodiment;
- FIG. 11 is a diagram illustrating the principles of A/B watermarking, which is a watermarking scheme that can be used in conjunction with the process of figure 10 according to a non-limiting exemplary embodiment;
- FIG. 12 is a flowchart of a process for verifying content delivery according to a non-limiting exemplary embodiment;
- FIG. 13 is a schematic diagram, in two parts A and B, of a distributed digital rights management system according to a non-limiting exemplary embodiment;
- FIG. 14 is a message sequence diagram of a viewer node pairing process, according to a non-limiting exemplary embodiment;
- FIG. 15 is a schematic diagram illustrating an information flow of various information pertaining to a content license, from the content creator node to the blockchain, according to a non-limiting exemplary embodiment;
- FIG. 16 is a flowchart of a process for writing a proof of licensing by a node of the peer-to-peer storage network according to a non-limiting exemplary embodiment;
- FIG. 17 is a double flowchart of a content token acquisition process according to a non-limiting exemplary embodiment, seen from the respective point of views of a viewer node and a blockchain node or the blockchain.

### Description of Embodiments

Structures or functions described herein in reference to the drawings may be implemented in various ways by the person skilled in the art and should not be limited to the details of the embodiments described. Each described function, engine, block, step can be implemented in hardware, software, firmware, middleware, microcode, or any suitable combination thereof. Functions and process or method steps represented may be grouped into broader functions or steps, or to the contrary divided as appropriate with regard to a specific implementation. A processor as described herein can comprise one or a plurality of processing devices, whether dedicated or not, and comprise a combination of hardware and software-based modules. While flowcharts and other diagrams illustrative of processes and methods may describe operations in a given sequence, the person skilled in the art would consider certain operations to be performed in parallel or in a different order. A storage medium as described herein may comprise any physical media that can be read from or written to by a processing device. Embodiments may be implemented by hardware, software or any combination thereof.

A non-limiting exemplary embodiment of a distributed content storage system will be described in what follows, in conjunction with a non-limiting exemplary embodiment of a distributed digital rights management system. Existing digital rights management systems may however also be employed in conjunction with the distributed content storage system described herein. Such digital rights management systems comprise for example those proposed by Widevine or PlayReady, the latter system being proposed by Microsoft. The person skilled in the art can easily adapt the teachings of the present description to adapt an implementation to the use of such digital rights management systems.

### I. System architecture overview

FIG. 2 is a high-level diagram of a content distribution network system architecture according to an exemplary embodiment. While the embodiment illustrated by figure 2 uses a peer-to-peer network as an example, other network types may be used, as long as these networks include nodes that comprise a storage functionality and data propagation functionality. One example of such a network type includes mesh networks.

The architecture comprises a peer-to-peer network 201 of nodes (called 'seeder nodes' in what follows), one of the functions of which is to store content in a distributed fashion and to share this content among themselves and with other devices. Content may for example be provided by a content provider, also called 'content creator' herein, through a content source or 'content creator node' 209. According to a non-limiting example, content may be provided in a format compatible with one among the dynamic adaptive streaming ('DASH') or HLS standard. In figure 2, the network 201 is illustrated as comprising three seeder nodes 202 to 204, but the number of seeder nodes may obviously be any number greater than one. The seeder nodes receive requests from user nodes (called 'viewer nodes' 210 to 212), under the control of respective viewers - the viewer nodes are the nodes through which the content is consumed or played back or stored for future use depending on the rights on a specific content. While only one content creator node is shown, content may of course be obtained from a plurality of such nodes, as well as from other content sources.

The system also comprises a blockchain peer-to-peer network 205, illustratively shown as comprising three blockchain nodes 206 to 208, without of course being limited to this number, this number being generally much larger. As is known per se, a blockchain is a database of transactions stored in a distributed and redundant manner among the nodes of the blockchain network. The transactions are organized as a chain of blocks and in which block content cannot be tampered with. As such, the blockchain provides a secure way of storing transactions, and the information stored in the blockchain can be shared openly and transparently. The blockchain network of device is also used to run smart contracts, which are pieces of software code verifying one or more conditions applicable to a given transaction, which validate or reject the transaction as a result of this verification, which provide support for interaction with the content creator nodes, the seeder nodes and viewer nodes. Smart contracts are stored in transactions and maintain registries of certain information for access by these nodes within the frame of the present disclosure. In order to obtain a fast access to data stored in the blockchain in general and such registries in particular, indexer tools are implemented in a fashion known per se. These tools index data in the blockchain and provide an API allowing nodes to query data stored in the blockchain as in a traditional database.

A function of the blockchain is to provide enhanced security at various instances within the content distribution process, as described in more detail later. In its interactions with the creator node, the blockchain allows the creation and sale of content tokens representative of rights to the content provided by the creator. In its interactions with a seeder node, the blockchain enables seeder nodes to obtain utility tokens in exchange for distribution of the content. In its interactions with a viewer node, the blockchain enables a viewer node to acquire a content token by trading it against utility tokens. Part of the utility tokens traded for this purpose may be set aside to remunerate the system owner or administrator or another party.

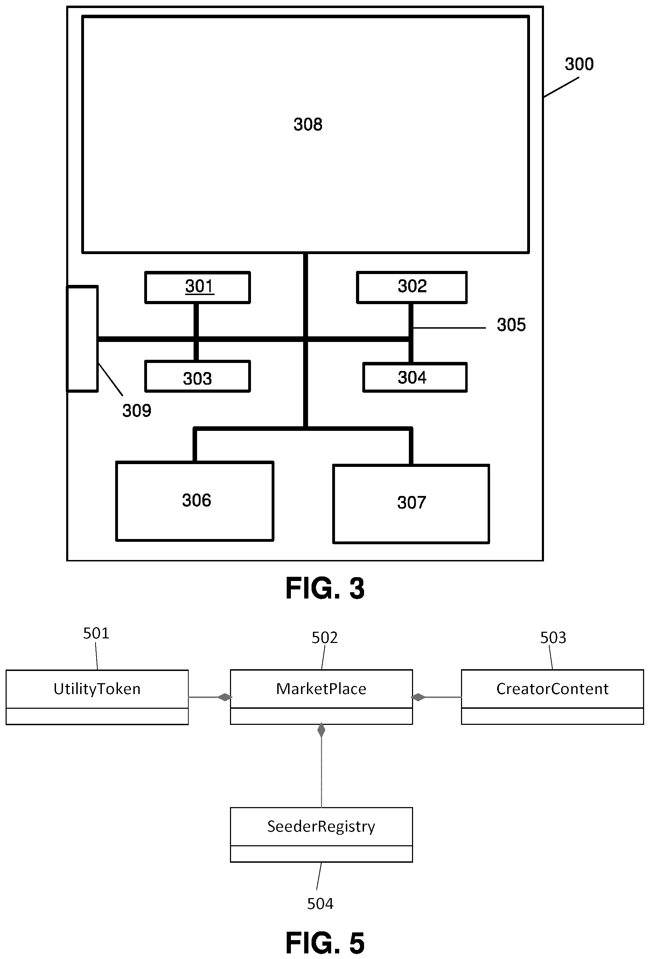

Fig. 3 is a functional block diagram of a device 300 which can be used to implement any of the content creator / content source node 209, seeder / distributed storage node 202 to 204, blockchain node 206 to 208 and viewer node 210 to 212. The device 300 of figure 3 comprises a processor 301, a ROM 302, a RAM 303 and a mass storage device 304 interconnected through an internal bus 305. The ROM and/or the mass storage device 304 comprises software code which, when executed by the processor, causes the device to perform the methods described herein. The mass storage device 304 is used to store any data relevant to the device's functionality, for example but not limited to content if the device 300 is used as a creator, seeder or viewer node or a copy of the blockchain and associated data (e.g. registries of token ownership) if the device is used as a blockchain node. The mass storage device may be implemented in various ways, including but not limited to hard drives and solid-state memories. While figure 3 shows components integrated into device 300, such components may be external and connected to the device 300 through any wired or wireless means or through a network. For example, certain storage functions may be implemented as cloud storage, the user interfaces may be wireless devices, the display may be connected through an appropriate wired link. Device 300 moreover comprises user input devices, e.g. a keyboard 306 and a mouse or trackpad 307, both of which may in effect be part of device 300, be external or implemented virtually using e.g. a touchscreen. Device 300 also comprises a display, which may be integrated or externally connected, with device 300 in effect providing a display signal. Device 300 moreover comprises various interfaces illustrated by reference 309, such interfaces comprising one or more of but not limited to a wireless network interface e.g. for IEEE802.11 Wifi or Bluetooth, a wired network interface such as USB or Ethernet, a peripheral device interface. Device 300 may comprise additional modules which are not illustrated (e.g. for providing power) and some of the modules mentioned above may not be present (e.g. the display, keyboard, mouse... may not be necessary for a server node) - the person in the art will readily adapt the device's 300 modules as seen fit for a specific application. Mass storage module 304 also comprises software allowing a user to interact with a specific device 300, control its functionalities and provide input as needed by the methods described herein. For example, if device 300 is a viewer node, the mass storage device 304 contains software allowing to order, pay for manage and view content - this may be done through a specific application, a web browser interacting with other nodes or any other adapted software. When the node is to store content, an appropriate file system is provided in the mass storage device 304. According to a non-limiting exemplary embodiment, the file system used is the Interplanetary File System ('IPFS') or the WebRTC peer-to-peer file system.

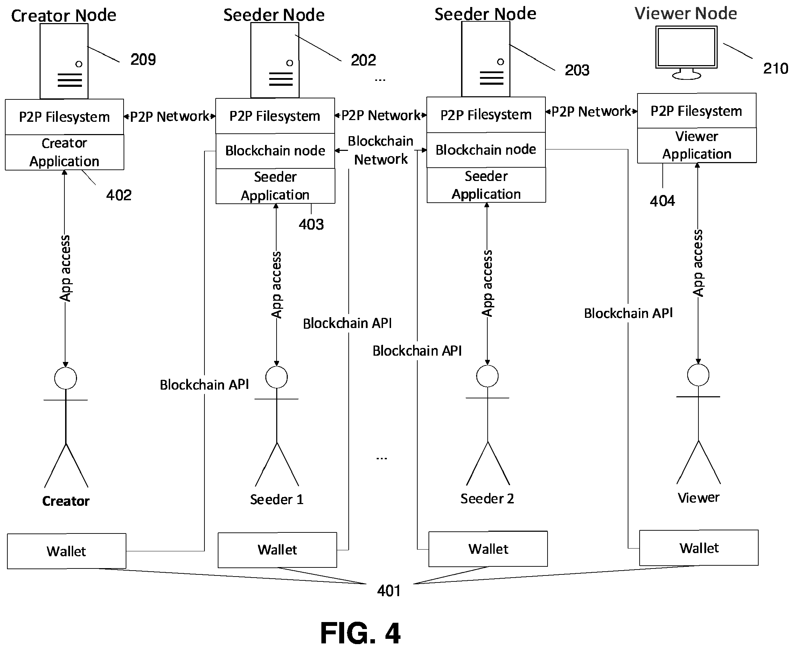

Figure 4 is another view of the general system architecture of figure 2, which focuses on the user-node interaction for the creator node, the seeder node and the viewer node. In the vocabulary used herein, a creator is the user of the creator node, a seeder is the user of a seeder node and a viewer is a user of a viewer node. Note that while the users are illustrated by stick figures, they can but do not necessarily represent real people - the input expected from a user may result from a program, preprogrammed data, an artificial intelligence subsystem, a script, or any other kind of source of adapted input. For example, a seeder may decide to offer to viewers a certain content for download through the seeder node network. The decision to do so may be made by a physical user interacting with his/her seeder node through an appropriate interface, or the decision may be generated as a function of one or more criteria, such as the time of the day or the availability of certain resources (storage, bandwidth) within the seeder node. In the example of figure 4, each node contains an application (creator application 402, seeder application 403, viewer application 404) which allows interfacing with the node. A user may have direct access to the application or access the application through a web browser running on another device in communication with the node. Nodes also comprise a file system allowing them to manage the content as a function of the node type, which includes but is not limited to uploading the content to a seeder for the creator node, downloading a content from a seeder for the viewer node, and lastly for a seeder node: downloading a content from a creator node, uploading it to a viewer node, sharing the content between seeder nodes in view of the distributed storage. Any data stored in the file system is uniquely identified by a Unified Resource Identifier, URI. Knowing a URI of a data item allows this data item to be obtained by any node.

In the architecture of figure 4, a distinct wallet account 401 is associated with each node. The function of these wallet accounts is to hold various tokens as described later. In figure 4, the wallet account of the creator node 209 and the wallet of a first seeder node 202 are in communication with the blockchain node network through the blockchain's application programmable interface (API). Similarly, the wallet of the viewer node 210 and the wallet of a second seeder node 203 are in communication with the blockchain network. Note that seeder nodes 202 and 203 may in practice be one single seeder node or distinct seeder nodes. When properly authorized by a wallet account owner node, the blockchain, under control of an appropriate smart contract, transfers tokens from one wallet account to another and registries token ownership changes. Wallets are shown as separate functional blocks in figure 4 for the purpose of clarity, but an actual implementation may for example see such wallets implemented based on a same software application, with data being stored in the blockchain.

### II. Smart Contracts

Smart contracts, which as mentioned above, are software modules stored in blockchain transactions and run by the blockchain nodes, encompass functions that can be called through an API and events which are emitted when appropriate triggering conditions are met. According to an exemplary embodiment, the following four main smart contracts are implemented in the system, as shown schematically in figure 5:
- a first smart contract 502 ('MarketPlace') with the non-limiting function to allow tokens to be exchanged for content;
- a second smart contract 503 ('CreatorContent') with the non-limiting function of content token creation;
- a third smart contract 504 ('SeederRegistry') with the non-limiting function of management of a registry of seeder (distributed content storage) nodes;
- a fourth smart contract 501 ('UtilityToken' smart contract) with the non-limiting function to allow creation of tokens (herein called 'utility tokens') that viewer nodes can trade for other tokens representative of content ('Content tokens').

Note that these smart contracts are provided to illustrate a non-limiting exemplary embodiment - the performed functions can be implemented differently, including by a larger or a smaller number of smart contracts. The grouping of given functions and/or events within a given smart contract described herein is made to present these functions and/or events in a clear manner. Additional smart contracts may be provided to implement further functions and/or events. In particular, according to certain exemplary embodiments, smart contracts to manage information registries regarding licensing and watermarking may typically be added to hold for example proofs as described later on. Note that events will not be described in detail below - they generally pertain to providing a message indicating that a function was performed or that one or more conditions are met.

Both the CreatorContent and UtilityToken smart contracts are token contracts that each maintain respective registries designating the owners of tokens managed by these smart contracts and updating these registries as a function of token transfers from one owner to another. The UtilityToken smart contract uses fungible tokens. According to a non-limiting exemplary embodiment, it complies with the ERC20 (Ethereum Request for Comments 20) Token Standard that allows such fungible tokens. The CreatorContent smart contract uses fungible or non-fungible tokens. According to a non-limiting exemplary embodiment, it is based on the ERC1155 standard. In the frame of the present description, the example of unique non-fungible tokens will be used. The person skilled in the art can select other smart contracts for token generation and management. For example, the system comprises ERC20 and ERC1155 based smart contracts providing functions for obtaining individual token wallet account balance and for transferring tokens among wallet accounts. Ownership registries are maintained by the token smart contracts and store important data such as the list of assets (content tokens, utility tokens) each wallet account owns, and mapping each asset to the owner wallet address. The person skilled in the art can use other token creation standards, such as for example ERC 721, or other types of smart contracts.

According to a non-limiting exemplary embodiment, the 'ContentCreator' smart contract- comprises the following functions:
- 'Create content' - a function called by the content creator node indicating a desired quantity of TokenIDs corresponding to a given content, a URI of a folder in the file system of the content creator node containing the encrypted content, content metadata and optionally a trailer of the content;
- 'URI' - a function called by nodes to obtain the URI of the metadata mentioned above for a given TokenID (the metadata contains the URIs of the content and trailer).

Other functions of the 'ContentCreator' smart contract enable content token minting, content token burning, obtaining a balance of a given wallet account or several wallet accounts with regard to content tokens, and transferring one or more content tokens from one account wallet to another account wallet.

According to the present embodiment, the 'UtilityToken' smart contract comprises a function allowing minting of utility tokens. According to a non-limiting exemplary embodiment, the use of this function is limited to the system owner or administrator. Utility tokens minted by the system owner or administrator may e.g. be sold for real currency to viewers.

Other functions of the 'UtilityToken' smart contract comprise utility token burning, obtaining a balance of a given wallet account or several wallet accounts with regard to utility tokens, transferring one or more utility tokens from one account wallet to another account wallet, and obtaining the total supply of utility tokens in the system.

One of the purposes of the 'MarketPlace' smart contract is to enable exchanging a content token against a given quantity of utility tokens, representative of a price of the content. One such an exchange is approved, this smart contract will trigger the transfer of the content token to the wallet account associated with the acquiring viewer, and the corresponding quantity of utility tokens to the wallet account associated with the content creator, based on function calls made to the smart contracts managing the content tokens and the utility tokens. A fee may optionally be deducted by the system owner or administrator on the quantity of utility tokens transferred.

According to the present embodiment, the 'MarketPlace' smart contract comprises the following functions:
(a) Functions for managing content offers and sales
   - 'Submit an offer' - a function called by a content creator node comprising a quantity of tokens to be offered for sale, their price and their respective token identifiers ('TokenIDs');
   - 'Cancel an offer' - a function called by a content creator node to cancel an offer that was previously made;
   - 'Accept an offer' - a function called by a viewer node to accept an offer for one or more TokenIDs identified in the function call;
(b) Functions for identifying offers used by viewer nodes
   - 'Get offers from seller' - a function called by a viewer node to obtain a list of offers made by a given content creator node (the 'seller');
   - 'Get offers by TokenID' - a function called by a viewer node to obtain the offers made for one or more TokenIDs identified in the function call;
(c) Functions for managing system owner or administrator fees
   - 'Get fee address' - a function called by nodes to obtain the address at which fees collected through content sales are stored;
   - 'Set fee address' - a function called by the system owner or administrator to define the address at which collected fees are stored;
   - 'Get fee percentage' - a function called by nodes to obtain the percentage of the price to be applied to a price to determine a fee amount;
   - 'Set fee percentage' - a function called by the system owner or administrator to set the percentage of a sales price to be set aside as fee.
Fees can be used for various purposes, including remuneration of the system owner or administrator and seeder nodes.

The blockchain maintains a registry of content offered for sale through the 'MarketPlace' smart contract. Any seeder node or viewer node can obtain a list of the different contents offered for sale at a given moment from the blockchain by calling an appropriate function. The corresponding function (referred to as 'GET / catalog' in the figures) is a function of a system indexer, which as mentioned previously is a standard functionality for managing blockchain data as a database and allow fast access to said data.

According to an exemplary embodiment, a content is represented by a content token, itself identified by a content token identifier ('TokenID'). A content token can be a non-fungible token ('NFT') or a fungible token ('FT'). In what follows, the example of an NFT will be used, but the embodiments described herein are not limited to such a token type. A content token is stored as a unit of data in the digital ledger that is the blockchain. The content token certifies that a digital asset, i.e. the content, is unique and therefore not interchangeable. A specific smart contract, the 'CreatorContent' smart contract mentioned above allows content token creation. The process is carried out between a content creator node and the blockchain. It is based on the Unified Resource Identifier of the content metadata, and the content metadata URI can be determined from the TokenID.

Table 1 represents an example set of content data model for a given content. The data model defines the content metadata. The table below is given as an example only - not all of the individual data is necessary, i.e. certain items can be optional based on the actual requirements of a specific application. A specific set of content metadata is initially stored by the content creator node also storing the content and used in the various methods described herein in the interaction between a content creator node, the blockchain and the seeder nodes. According to a specific non-limiting exemplary embodiment, at least items 1, 2, 6, 8 and 10 are required data items. According to a non-limiting exemplary embodiment, the TokenID contains the URI of the content metadata file.

Items 14 and 15 of Table 1 correspond to a variant non-limiting exemplary embodiment in which a distributed digital rights management ('DDRM') scheme as described later is implemented. These items in particular may differ, or be absent, or be complemented with additional data if other DRM schemes are applied.

**Table 1**

| **#** | **Data** | **Description** | **Data type** |
|---|---|---|---|
| 1 | contentID | Unique content identifier | String |
| 2 | title | Title of the content | String |
| 3 | description | A short description of the content | String |
| 4 | posterURI | uniform resource identifier, URI, of the poster content | String |
| 5 | backgroundURI | URI of the background content | String |
| 6 | category | Categories of the content (e.g. among "action/adventure", "sci-fi", "comedy", "drama") | Array |
| 7 | duration | Duration of the content | String |
| 8 | trailerURI | URI of the clear (unencrypted) trailer content in the file system | String |
| 9 | trailerSize | Size in bytes of the clear trailer content | Integer |
| 10 | contentURI | URI of the content in the file system | String |
| 11 | contentSize | Size in bytes of the content | Integer |
| 12 | contentKey ID | Key identifier of the content | String |
| 13 | contentKey | Encryption key of the content | String |
| 14 | contentFragmentKeyURI | URI of the fragment key folder, containing the fragments of the keys as split by a content creator node | String |
| 15 | contentLicenseURI | URI of the content license template | String |

The purpose of the seeder registry is among other things to give a node of the peer-to-peer storage network the possibility of declaring itself as a node providing content, to provide such information to other nodes. According to the present embodiment, the 'SeederRegistry' smart contract comprises the following functions:
(a) Functions for managing node registration used by seeder nodes
   - 'Register' - a function called by a seeder node to declare itself within the seeder registry.
   The seeder node provides its peer identifier, i.e. an identifier in the peer-to-peer distributed content storage network.
   - 'Unregister' - a function called by a seeder node to remove itself from the seeder registry.
   The seeder node provides its peer identifier, i.e. an identifier in the peer-to-peer distributed content storage network.
(b) Functions for proposing content used by seeder nodes
   - 'Pin Content' - a function called by a seeder node to declare that it is ready to offer the content for download or sharing. The seeder node provides a content token identifier corresponding to the content.
      According to a variant embodiment, several contents identified by respective content token identifiers are pinned using a single function call.
   - 'Unpin Content' - a function called by a seeder node to declare that it withdraws its offer of the content for download or sharing. The seeder node provides a content token identifier corresponding to the content.
      According to a variant embodiment, a further function allows to pin several contents identified by respective content token identifiers using a single function call. For example, a seeder node may decide to propose all movies of a certain type, such as action movies.
(c) Functions for obtaining content related information used by viewer nodes
   - 'Get Seeders by Content' - a function called by a viewer node to obtain a list of seeders proposing a content identified by a content token identifier provided as parameter of the function call.
   - 'Get Content by Seeders' - a function called by a viewer node to obtain a list of contents proposed by a given seeder node identified by a seeder node address or identifier provided as parameter of the function call.
(d) Function for reporting to the seeder registry, by a challenging seeder node, a challenge failure of a challenged seeder node
   - 'Slash' - a function called by a seeder node that challenged another seeder node for a given content, and where the challenge failed. Function call parameters include the address or identifier of the challenged seeder node, an indication of the type or reason of failure and a signature of the challenging node.
(e) Seeder node reward related function
   'Set Reward' - a function called by the system owner or administrator to determine the reward or remuneration of seeder nodes. According to one non-limiting exemplary embodiment, the reward is a percentage of content price, the corresponding sum being shared among seeder nodes. According to a variant embodiment, the sharing is function of the relative quantity of data provided by each seeder node when transferring content to viewer node.
(f) Key fragment related function
   'GetSeederKeyPool' - a function called by nodes to obtain the list of all registered seeders that agree to reencrypt key fragments and provide them to viewer nodes.

According to an embodiment, additional smart contracts are implemented in the blockchain, including a smart contract for license management ("Content License Smart Contract") and a smart contract for viewer and viewer node pairing ("Viewer Registry Smart Contract"). The functionalities of these contracts will be described in conjunction with the relevant sections herein.

### III. Content Offer

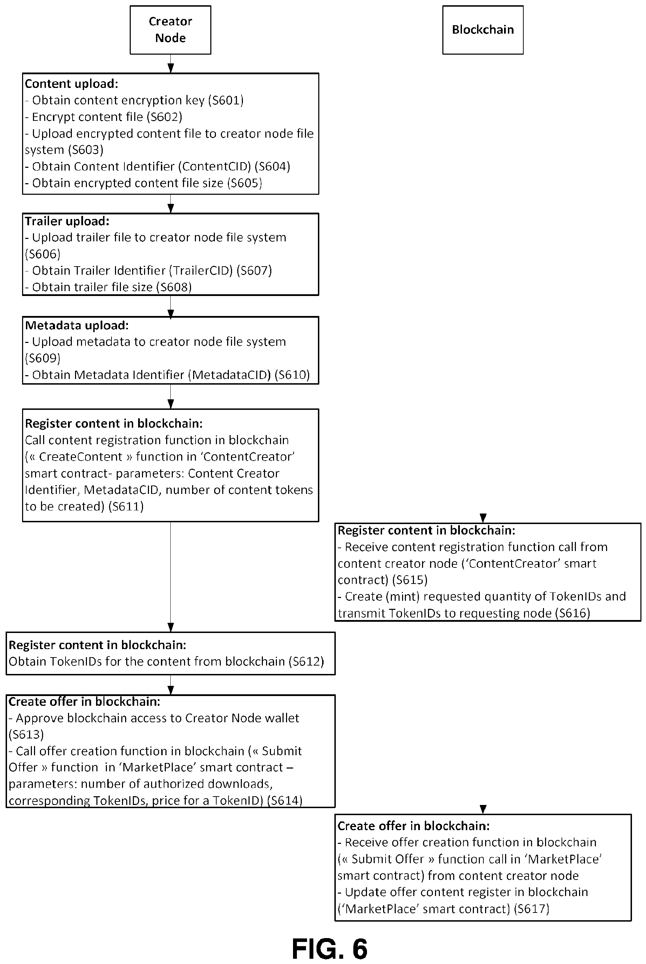

Figure 6 is a flow chart diagram representing a content offer process according to a non-limiting exemplary embodiment. The process illustrated by Figure 6 is seen from the point of view of a content creator node wishing to offer content on one hand and from the point of view of the blockchain on the other hand. Note that figure 6 and similar figures later on are indicative only and the different actions shown need not necessarily be performed in the order described.

On the side of the content creator node, first, a content upload is performed to add the content to the local file system and obtain corresponding metadata that can be used in subsequent steps. A content encryption key (S601) is first obtained. The key may for example be stored in a secure module of the content creator node. The encryption scheme used may, for example, be an AES-based encryption, such as AES 128 CTR. The content file is then encrypted (S602) and the encrypted content file is then made available in the content creator node file system (S603). A corresponding content identifier ('Content CID') is obtained, as well as the size of the encrypted content file - it will be used to define the content URI in the metadata table. The content identifier is obtained by hashing the content file using a cryptographic hash - any difference in the content would produce a different CID, i.e. the CID uniquely identifies the content, but the same content added to two file systems produces the same CID. As an example the sha-256 hashing algorithm can be used.

Second, trailer upload to the file system is optionally performed, a corresponding trailer identifier ('TrailerCID'), used for generating the Trailer URI, and trailer file size are obtained in a manner similar to what was done for the content (S606 - S608). The trailer is not encrypted.

Third, part or all of the metadata previously described is uploaded and a metadada identifier ('MetadataCID') is obtained (S609, S610).

Fourth, the content creator node initiates the registration of an offer for the content in the blockchain. At this stage, the content creator node first requests a number of content tokens to be created for the content (S611). This is performed by calling the 'CreateContent' function of the 'ContentCreator' smart contract. Parameters include the Content Creator Identifier, the MetadataCID and number of content tokens to be created. The block chain receives the request, mints the content tokens and sends the corresponding token identifiers ('TokenIDs') to the content creator node (S615, S616). The ownership registry of the newly created tokens is updated accordingly with the owner being the content creator.

The content creator node receives the token identifiers (S612) and approves access to its wallet account by the blockchain (S613) to allow debit of the wallet account for enabling writing to the blockchain. The content creator node then submits an offer (S614) for the content through the appropriate function call ('Submit Offer') to the MarketPlace smart contract, providing the number of authorized downloads, the same number of content token identifers for this content and a price per download/content token (e.g. in utility token units or real currency).

The blockchain receives the offer submission and updates (S617) a corresponding registry with the offer data, so that viewer devices and seeder devices may find this offer when querying the registry through the MarketPlace smart contract function calls.

At the end of the process of figure 6, the offer for a content has been made available in the blockchain and the file system of the content creator node holds all necessary information for allowing the download of the encrypted content file and the associated metadata. This content is now ready to be stored in a distributed fashion in the peer-to-peer storage network nodes, i.e. the seeder nodes.

### IV. Distributed Content Storage

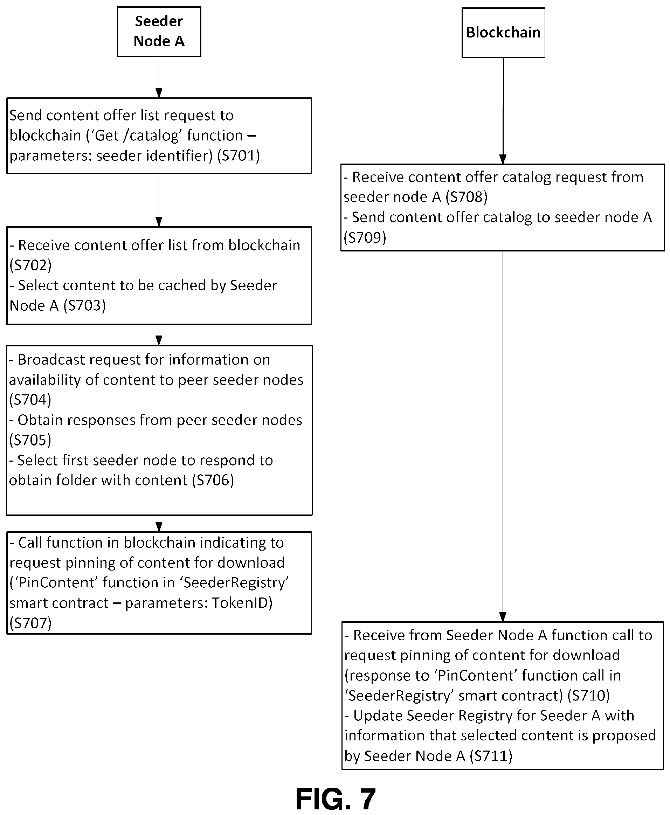

Figure 7 is a process for storing content in a distributed fashion in the peer-to-peer seeder node network, according to a non-limiting exemplary embodiment. The process is seen from the point of view of a seeder node A wishing to participate in the peer-to-peer storage of a certain content on one hand and the blockchain on the other. In the frame of the illustrated process, at least one node of the peer-to-peer storage network already stores a given content to be shared with other nodes of this network. In practice, there is always at least one node storing a content for which an offer has been posted: the content creator node. According to the present embodiment, the content creator node also acts as a seeder node with regard to allowing such content to be downloaded by other nodes.

For the purpose of providing a more detailed example, in the frame of figure 7, it is supposed that two seeder nodes B and C (not shown) already store the content that seeder node A wishes to obtain, but this content may very well be available only in one seeder node.

First, seeder node A requests a catalog of available offers to the blockchain (S701) by calling the 'Get /catalog' function mentioned earlier. According to a variant, various filters may be added to limit the amount of data or number of contents retrieved. Then, the blockchain receives the request (S708) and returns the list of contents offered for sale by the content creator nodes (S709). The catalog contains at least content identifiers, but may also contain additional data useful for allowing the seeder node A, or a person controlling the seeder node A, to select one or more contents to be downloaded by seeder node A to participate in the distributed storage and subsequent distribution of the selected content or contents. At the next stage, seeder node A, having received the catalog (S702), selects a content to be cached for distribution (S703). Seeder node A broadcasts a message (S704) within the peer-to-peer network of seeder nodes to determine which seeder nodes already store the selected content. The broadcast message contains the identifier of the selected content, ContentCID. In the example of figure 7, two seeder nodes store this content and both respond to the broadcast message (S705). According to a non-limiting exemplary embodiment, seeder node A selects the first seeder node it receives a positive response from to download the folder containing the content file and the metadata (S706). The data downloaded and stored by seeder node A may also include the trailer file when trailers are used and/or the encrypted key fragments when distributed key storage is implemented. The content may be split into a plurality of chunks.

However, other criteria may be applied to the selection of the seeder node to download the selected content from, e.g. based on an indicator of the available bandwidth and best ping value.

Once the content has been copied to its own file system, the seeder node A calls (S707) the function of the Seeder Registry smart contract for 'pinning' the selected content ('Pin Content' function), i.e. for indicating that seeder node A is storing (or about to store) the selected content for further distribution. The function call is received (S710) by the seeder registry smart contract of the blockchain, which updates (S711) the seeder registry with the information that seeder node A proposes the selected content.

According to a variant embodiment, the content creator node, while acting as a seeder node with regard to letting the content and associated data be downloaded by other nodes, does not necessarily provide the service of storing content for download other than its own content. According to another variant embodiment, the content creator node provides the service of storing content for download for content other than its own.

When a viewer node needs to obtain key fragments corresponding to a content it wishes to decrypt, it

At the end of the process of figure 7, at least two nodes have stored encrypted content in a distributed manner.

### V. Storage ('Seeder') Node Challenges

According to a non-limiting exemplary embodiment, a process is implemented to verify that nodes of the peer-to-peer storage network store the actual content they claim they store, as indicated in the seeder registry. The purpose is to limit the number of seeder nodes claiming a reward although not storing a given content, or a fake version thereof.

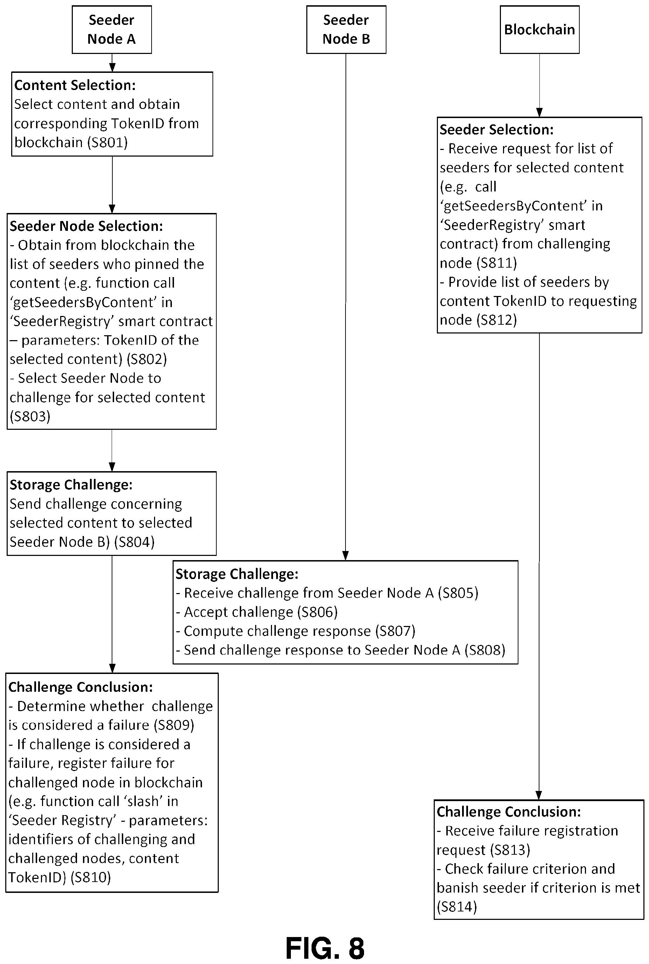

Figure 8 is a flowchart of such a process, in which a seeder node - the challenging node - challenges another seeder node - the challenged node - as to whether a content stored by the challenging node is authentic. If the challenge fails, a corresponding information is transmitted to the blockchain, which may lead to a banishment of the challenged seeder node.

First a challenging node is determined. Various methods may be applied: any seeder node periodically acts as a challenging node, any seeder node acts as challenging node on a random basis, one or more specific seeder nodes, e.g. trusted nodes such as the content creator nodes which harbor the original content, are explicitly given the role for challenging other nodes, etc.... Other selection processes maybe applied by the person skilled in the art, e.g. based on the seeder nodes storing a specific content.

In the example illustrated by figure 8, seeder node A is the challenging node, while seeder node B is the challenged node. A TokenID is obtained from the blockchain by the seeder node for a content it selected for the challenge (S801) and the list of seeder nodes storing that content is then requested from the SeederRegistry smart contract ('getSeedersByContent' function, using the TokenID as parameter (S802)). The seeder node A then selects one of the seeder nodes storing the content to carry out the challenge (S803). According to a variant embodiment, the challenge is carried for more than one seeder node, but within the frame of figure 8, we suppose that only one seeder node is challenged - seeder node B. A challenge is sent by seeder node A to seeder node B (S804).

The challenge sent by the challenging node contains data identifying the content for which the challenge is carried out (e.g. the Token ID) and, if necessary depending on the implementation and/or the context, data that the challenged node requires to respond to the challenge, e.g. an identification of the type of challenge, for example in case this type is not implicit or a selection among several challenge types needs to be made. The challenged node receives the challenge from the challenging node (S805).

Optionally, the challenged seeder node acknowledges it received the challenge and/or that it accepts the challenge (S806).

Based on the content identification data, the challenged node performs the challenge with regard to the selected content (S807) and transmits the challenge response to the challenging node (S808).

According to a non-limiting exemplary embodiment, the challenging node selects a content for which a challenge is to be carried out among the contents that it stores in its file system. This allows determining locally the expected response to the challenge. For example, the challenge may consist in applying a cryptographic hash function to the content file. In case the TokenID sent by the challenging node to the challenged node for identifying the content, this TokenID is obtained by the challenging node from the blockchain based on the content identifier of the selected content (S811, S812). The content identifier is known by the challenging node from the metadata it stores with regard to the content.

According to a non-limiting variant embodiment, if the challenged seeder node cannot be reached or does not answer the challenge request, the challenging seeder node may carry out retries, e.g. N retries, where N is an integer equal or greater than 1. If after N retries, the challenging node did not receive a response, it concludes that the challenged node failed the challenge.

For the purpose of computing the response to the challenge (S809), the challenged node may retrieve the content file from its file system, depending on the challenge type. In case the challenge consists in providing a hash value of the content file, the hash value is computed and sent to the challenging node.

The challenging node determines whether the challenge is a success or a failure (S809). According to a non-limiting exemplary embodiment, the challenging node sends a message for registering the failure with the blockchain (S810). Upon reception (S813), the blockchain determines whether the challenged node should be banished or not, i.e. whether it should be deleted form the seeder registry, based on a failure criterion. According to a non-limiting exemplary embodiment, the 'slash' function of the seeder registry smart contract is called by the challenging node to registry a failed challenge for the challenged node. The function call preferably contains information signed by the challenging node with its private key. According to one non-limiting exemplary embodiment, this information comprises the identifier of the challenging seeder node, the identifier of the challenged node. The information may also comprise any one or more among the TokenID, the time of the challenge, the reason of the failure (bad response, no response...). No action is taken if the challenge was successful. The seeder registry smart contract manages a counter of failures for every seeder node. The counter of the challenged node is incremented in response to the reception of the 'slash' message. If the counter reaches a predetermined threshold, the smart contract may trigger one or more actions such as the removal of the challenged node from the seeder registry.

### VI. Encryption and key distribution

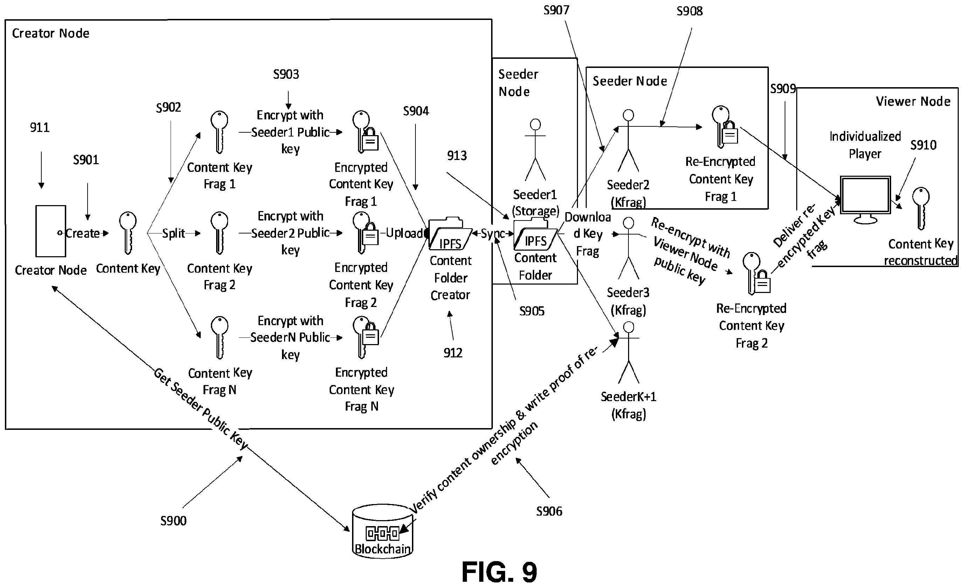

Figure 9 is a schematic diagram illustrating one possible encryption key distribution scheme according to a non-limiting exemplary embodiment.

According to this embodiment, a content is encrypted by a content source, such as a content creator node 911, using an encryption key called 'content key' in figure 9. For that purpose the content key was created by the creator node (S901) or obtained through other means e.g. from a trusted device. As indicated previously as an example, such a key may be an AES 128 CTR key. The content source has also knowledge of the respective public keys of at least N seeder nodes, with N an integer greater than one. The identifiers of the seeder nodes can be obtained from the blockchain (S900) and the content source can request the respective public keys from N such seeder nodes. The content key is split into N fragments (S902), with N greater than two, applying a key sharing algorithm such as for example the Shamir Secret Sharing (SSS) algorithm. According to such an algorithm, at least K key fragments are required to reconstruct the content key, with K an integer greater than one and smaller or equal to N. Each fragment is encrypted using one of the N public seeder node keys (S903). The encrypted key fragments are then uploaded to a key fragment folder of content folder 912 in the creator node file system (S904). The content metadata is updated with the corresponding URI ('contentFragmentKeyURI').. When a seeder node obtains content, it copies the entire content folder 912 from the content creator file system into a folder 913 of its own file system (S905) - it thus holds all encrypted fragmented keys for that content.

Thus the key fragments, encrypted with the public keys of N seeder nodes, are also stored in a distributed fashion in the network of seeder nodes. Storing encrypted key fragments for a given content and providing a public key for key fragment encryption are two distinct functionalities - a given seeder node may very well store key fragments of which none were encrypted with its public key.

In order to be able to decrypt a content, a viewer node will need to obtain K fragments of the corresponding key. From the network of storage nodes, the viewer node obtains the content metadata associated with the content. As indicated earlier, the TokenID contains the metadata URI. This metadata comprises the URI of the folder holding the encrypted key fragments. Each encrypted key fragment allows identification of the seeder node the public key of which was used to encrypt the key fragment. Having access to the key fragment folder, knowing the N encrypted key fragments thus allows a viewer node to identify which seeder nodes it should address to obtain the required K key fragments. The viewer node sends a request to a seeder node for obtaining a key fragment by specifying the token identifier and the viewer's public key. The seeder node having received the request then obtains (S907) the corresponding encrypted key fragment from a seeder node storing the key fragment folder, decrypts the obtained key fragment using its private key and reencrypts (S908) the key fragment with the viewer node's public key before transmitting it (S909) to the requesting viewer node. When enough key fragments have been obtained, the viewer node can reconstruct the content key (S910), decrypt and play back the content.

According to a non-limiting exemplary embodiment, the seeder node receiving a request for a key fragment checks a right to the content exists for a viewer using the viewer node having issued the request. The check of a right may consist in checking that a corresponding token is owned by the viewer - this check may be performed by verifying that the viewer's account holds one or more of such tokens.

According to a variant non-limiting exemplary embodiment, each seeder node having performed a key fragment reencryption produces proof of the fact that this reencryption was performed (S906), using an RSA encryption algorithm based on public and private keys. The proof is stored in a registry within the blockchain and can be based on a zero-knowledge proof algorithm. Other seeders access the registry to verify that the reencryption was performed correctly.

The distributed storage of the content key fragments has the advantage that the original content source does not need to be constantly present within the network in order to provide the content key when required by a viewer node. Moreover, none of the seeders possessing a key fragment can reconstruct the entire key. Lastly, even if one seeder node storing a key fragment is unreachable, the other seeder nodes enable reconstruction of the key, provided N is chosen with a sufficient security margin.

### VII. Watermarking

According to a non-limiting exemplary embodiment, content watermarking is performed. The purpose of watermarking the content is to enable identification of the source of a given content, the watermarking being chosen to be specific to the viewer node requesting it. For example, a malicious viewer node may have leaked a content to a device external to the network described herein.

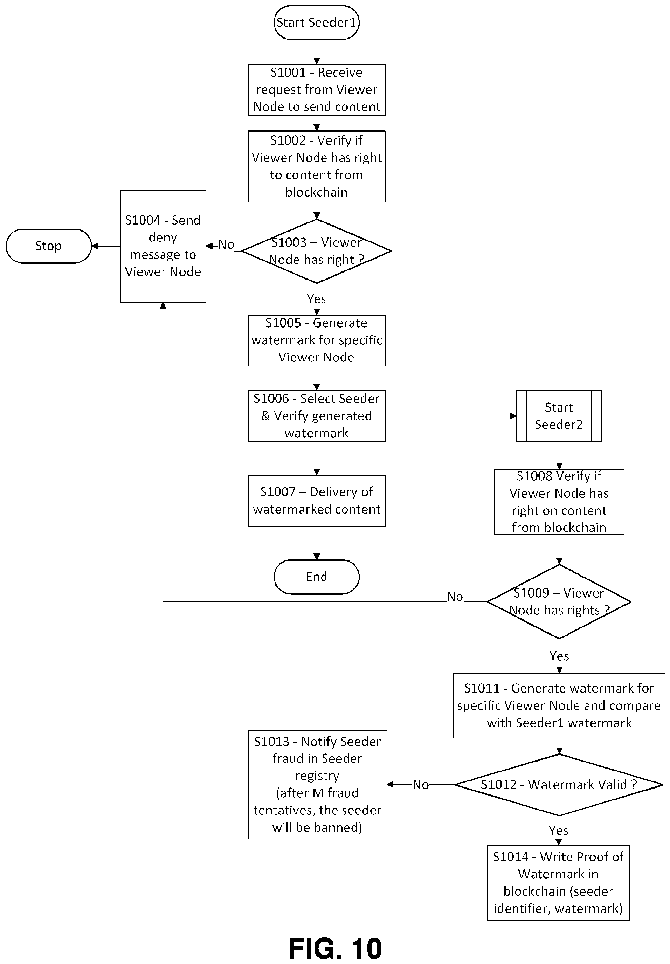

Figure 10 is a flowchart illustrating a watermarking process according to a non-limiting exemplary embodiment. The watermarking is performed by seeder nodes. According to the illustrated exemplary process, a first seeder node receives a request for content from a viewer node (S1001). The first seeder node checks whether the viewer node has the right to download the requested content (S1003). This is performed e.g. by checking whether the viewer owns a token for the content in the blockchain. If the viewer node does not have the required rights to the content, the first seeder node sends a denial message to the viewer node (S1004) and the process stops. If the viewer node does have the required rights to the content, the seeder node generates a version of the content with a watermark specific to the viewer node having requested the content (S1005). The first seeder node then delivers the watermarked content to the requesting view node (S1007). The first seeder node also selects a second seeder node for checking the watermark (S1006). Indeed, a malicious first seeder node may generate anon-valid watermark. This second seeder node is a node that stores the same content as the one requested by the viewer node. The first seeder node sends to the second seeder node a proof of the watermark and the identity of the requesting viewer node. The proof of the watermark may for example be a cryptographic hash of the watermarked content. The function of the check performed by the second seeder node is to ensure that the watermark that was generated by the first seeder node is valid. First, the second seeder node checks whether the viewer node has the access rights to the content (S1009) and in the negative, sends a denial message to the viewer node (S1004). Such a case may occur for example if the first seeder node transmits a fake content to the viewer node, or a content that is deficient (such as a lower resolution version) which benefits the first seeder with regard to local resource requirements. The second seeder node also generates a content watermarked as a function of the identity of the viewer node, produces a corresponding proof (S1011) and compares its own proof with that provided by the first seeder node (S1012).

Optionally, if the proofs match, the proof of the watermarking is written into a watermark registry of the blockchain, along with the identifier of the first seeder and the proof (S1014) - this information may later be used to reward the first seeder node for the content transmission.

If the proofs do not match, the second seeder node records a failure in the seeder registry. The seeder registry smart contract will then check whether the first seeder node ought to be banished or not, in view of one or more predetermined criteria. For example, if M or more failures have been recorded, with M equal to or greater than one, then the first seeder node may be banished.

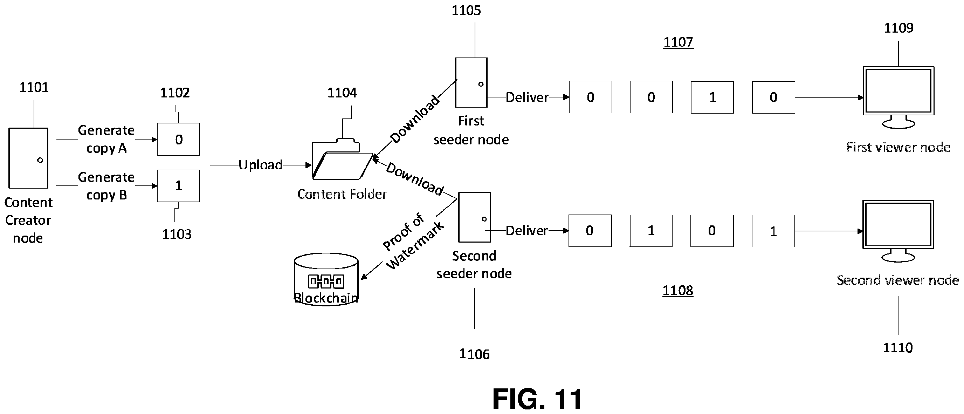

One type of watermark that can be advantageously used within the process described above is the so-called 'A/B watermark' or 'two-step watermark'. Figure 11 is a schematic diagram illustrating the principles of this watermark, as applied to the context described herein. According to one possible non-limiting exemplary embodiment, the content creator node 1101 providing the original content provides two copies of the content in its content folder 1104 of its file system, copy A referenced 1102 and copy B referenced 1103. Each copy is watermarked with a different value (e.g. "0" and "1"). A seeder node 1105 participating in the sharing of this content will download both copies and, when receiving a request for the content from a viewer node, produce a mix of these two copies as watermarked content, the mix being function of the requesting viewer node identity, i.e. a first viewer node 1109 will receive for a given content a version 1107 marked with a different watermark than a second node receiving another version 1108 the same content. The watermarked content thus identifies the requesting viewer node. The reverse process to that applied by the seeder node will yield the viewer node identity.

### VIII. Digital Rights Management

According to a non-limiting exemplary embodiment, a distributed digital rights management system is implemented. A digital rights management system and process is proposed that is particularly adapted to secure content in a non-managed network. According to this embodiment, a content is protected by a license that comprises:
- License data
- A license key

The license data comprises usage rules for the licensed content. Such rules contain conditions and limits defining how the viewer can consume the content (e.g. such as the allowed period for viewing the content, or whether it is allowed to resell the content). The license complements the token ownership information. Such rules may have various sources - according to the present non-limiting embodiment, at least part of the usage rules are provided by the content creator node. E.g. the content creator may define under which conditions the content he/she provides can be consumed and code the usage rules accordingly.

The viewer node, or the viewer through the viewer node, may be required to provide further license data, This may for example be the case when the license template or the usage rules require data to be provided by the viewer and/or the viewer node. Viewer or viewer node data is is not necessarily required. The presence of such data may be optionally implemented or be implemented but then not systematically applied to all license templates. In the examples, below it is assumed that such data is indeed present.

The license key is the key allowing to decrypt the content. Within the context of the embodiments described above, it is the content key split into fragments. A device wishing to decrypt the content is required to obtain key fragments from distinct nodes of the distributed storage network.

According to the present non-limiting exemplary embodiment, license data provided by the content creator node is stored in the distributed storage node network, whereas, when present, data provided by viewer node is stored in the blockchain. In what follows, the data provided by the viewer node may also be referred to as 'dynamic' data or information, since it may for example change from viewer to viewer (e.g. it may depend on viewer input, viewer triggered events...), or change over time. It may for example comprise the license start date and the license expiration date, e.g. when a given viewer triggers this start date. The data stored in the content storage network is by opposition referred to as 'static' data or information, since it be stable (copyrights, High bandwidth Digital Content Protection 'HDCP' constraints, permanent buy, length of time interval during which use is allowed...).

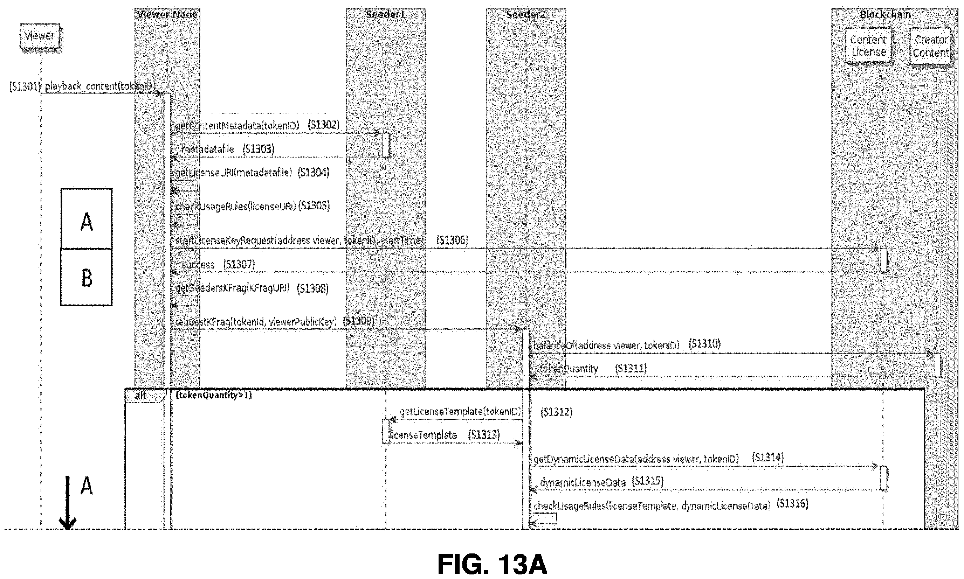

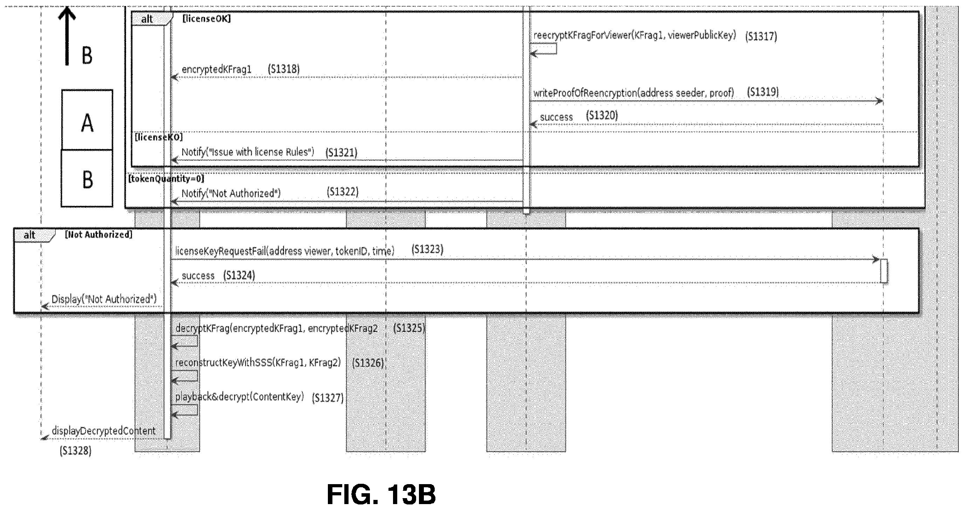

Figure 13 illustrates the concept of such a distributed system, in which a viewer obtains rights to a content, defined by a license for this content. A device such as a node needing to check the license of a viewer can verify the license content by accessing the information stored in the blockchain and/or a node of the peer-to-peer storage network, depending on the information that is needed.

Figure 13 is a message chart diagram that provides detailed messages exchanged between a viewer node, a first seeder node (`Seeder1'), a second seeder node ('Seeder2') and the blockchain with regard to obtaining a license. The license is associated with a content for which a token identified by a token identifier ('TokenID') is owned by a viewer. The first seeder node stores the content folder containing in particular the metadata and content files. One of the key fragments for this content was previously encrypted using the public key of the second seeder node. Only one seeder node required to decrypt a key fragment is shown to keep the diagram readable - the process for obtaining additional key fragments is identical to that shown in figure 13 in conjunction with the second seeder node.

As shown in figure 13, a viewer first selects a content by accessing the viewer node (S1301). The viewer node obtains the metadata file corresponding to the token identifier of that content from the first seeder node (S1302, S1303). The token identifier was previously obtained from the seeder registry of the blockchain. The metadata file is parsed to obtain the license template URI (S1304). The viewer node also obtains the usage rules as indicated in the license template obtained using the license template URI (S1305). This information was initially provided by the content creator - according to variant embodiment, it could also be obtained from another source, or be generic to the system. The viewer node then writes information further defining the use of the right to the blockchain - in the example of figure 13, this data comprises a start time, associated with a viewer identifier and the content token identifier (S1306) - an appropriate function of the Content License smart contract is called for that purpose. If the step is acknowledged and being successful (S1307), the viewer node obtains the identifiers of the seeder nodes from which the decrypted key fragments are to be requested, such as the second seeder node - in the present example, these identifiers are derived from the encrypted key fragments (S1308). The viewer node then issues key fragment requests to the appropriate number of seeder nodes - one such request is shown in figure 13 (S1309). The second seeder node checks in the blockchain (by calling the Creator Content smart contract) whether the requesting viewer node has a right to the content (S1310, S1311). In the case of the present example, this is performed by checking whether one or more tokens for this content are owned by the viewer in his or her wallet.

In the case where the viewer does have a right (e.g. the token balance is equal or greater than 1), the second seeder node will perform another check, based on rules and/or criteria defined by the license. The second seeder node obtains the license template from the first seeder node (S1312, S1313). This license template contains the static data of the license information. The dynamic data is obtained from the blockchain (S1314, S1315). The second seeder node checks both (S1316).

If the check is positive, the second seeder node proceeds with reencrypting (S1317) the key fragment obtained from the first seeder node with the public key obtained from the viewer node and transmitting it to the viewer node (S1318). An example of a process according to which a key fragment is obtained by the second seeder node has been described in conjunction with figure 9. The second seeder also writes a proof of reencryption to the blockchain (S1319) and obtains an acknowledgment from the blockchain (S1320).

In case the conditions defined by the license are not met, the second seeder node notifies the viewer node that there is an issue with the license (S1321). No key fragment is provided.

In case the check of whether the viewer has a right is negative (e.g. no token is owned by the viewer for that content), the viewer node is notified (S1322) by the second seeder node that it is not authorized to obtain a key fragment. The failure is written to the blockchain (S1323, S1324) and a message of lack of authorization is displayed to the viewer (S1324).

Key fragments obtained by the viewer node are decrypted (S1325 - two key fragments are shown in figure 13), the content key is reconstructed (S1326). The content can eventually be played back and displayed (S1328).

According to a variant embodiment, a pairing of a viewer with a viewer node is performed. The viewer node is thus linked to a specific viewer, or 'individualized'. A specific registry is created and managed in the blockchain for storing this pairing or viewer node / viewer association. In what follows, this registry will be referred to as the 'viewer node registry'. The viewer nodes may typically be playback devices (a set top box, an application running on a smart phone or a computer...). This pairing allows any node of the system interacting with a viewer node to determine the identity of the associated viewer. When a viewer accesses a viewer node, the viewer node checks in the blockchain whether the viewer is already paired with the viewer node. If this is not the case, a pairing process is carried out. According to the present example, in the blockchain, the pairing consists in storing an association between a public key of the viewer node and a viewer identifier, which according to one possible example, is an identifier of a wallet of the viewer.

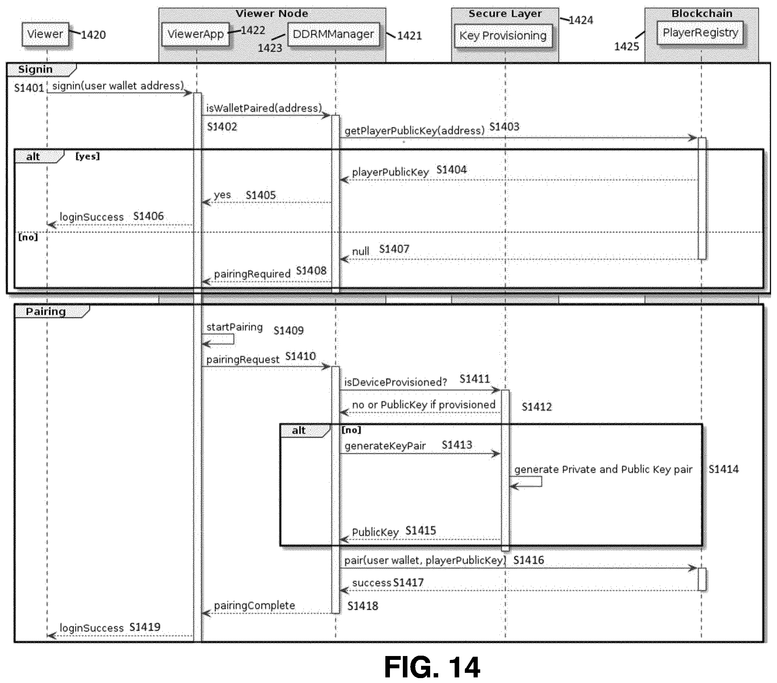

Figure 14 is a message sequence chart illustrating the principles of a pairing process according to a non-limiting exemplary embodiment.

In the example of figure 14, a viewer 1420 signs in with a viewer node 1421, providing a viewer wallet identifier (S1401). The viewer interacts with a viewer node application 1422 of the viewer node 1421. The viewer node also comprises distributed digital rights management software 1423, referred to as 'DDRM Manager' in what follows. The DDRM Manager is requested by the viewer node application to check whether a pairing already exists between the viewer node 1421 and the viewer wallet (S1402), identified by the address of the wallet. The DDRM Manager then checks with the blockchain whether this is the case by sending an appropriate request to the blockchain 1425 (S1403). In response, the viewer node obtains either its own public key (S1404), if a pairing exists - this is then confirmed to the viewer node application (S1405) and a login success is displayed to the viewer (S1406). In case no pairing exists (S1407), the DDRM Manager notifies the viewer node application that a pairing is required (S1408).

If a pairing is required, the viewer node application initiates the pairing process (S1409). A pairing request is sent to the DDRM Manager (S1410). The DDRM Manager checks with a secure layer 1424 whether the viewer node already has a private and public key pair (S1411). The secore layer 1424 can typically be implemented using a secure processor or secure enclave within viewer node 1421, it may also be implemented as a device external to viewer node 1421.

If the response (S1412) of the secure layer is negative, then a key pair is generated for the viewer node (S1413, S1414) and the DDRM Manager obtains a public key in return (S1415).

If a key pair already exists, then the secure layer communicated the existing public key to the DDRM Manager in its response (S1412).

Having at this point obtained a public key, the DDRM Manager requests a pairing by sending an appropriate request to the blockchain - the request identifies the viewer wallet and the viewer node's public key (S1416). The blockchain registers the pairing and notifies the registration to the DDRM Manager (S1417), the latter notifying the pairing completion to the viewer node application (S1418), which can then confirm the login to the viewer (S1419).

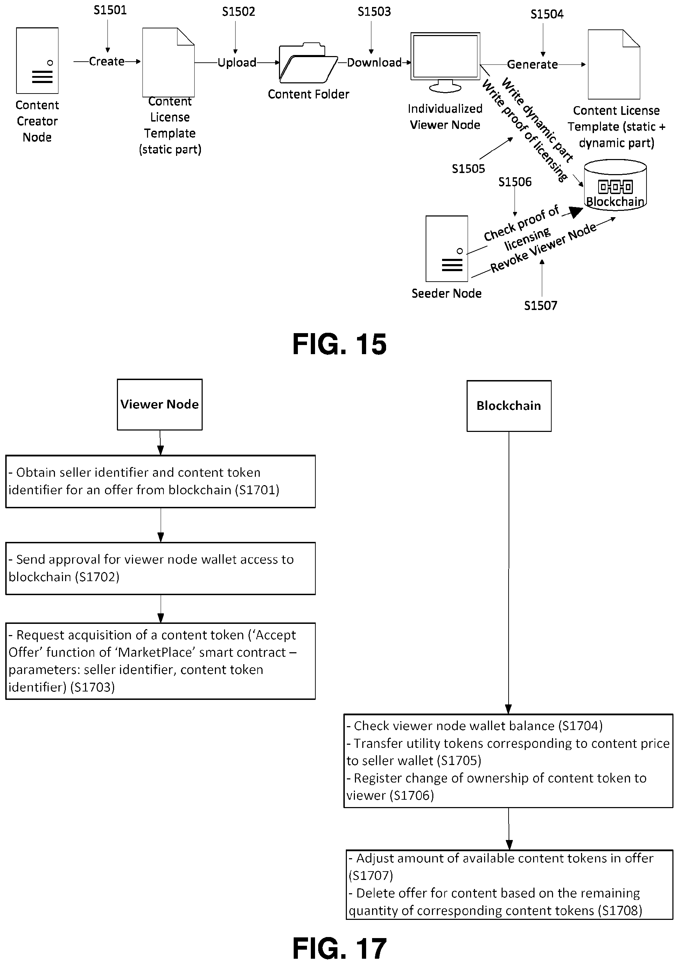

Figure 15 is a schematic diagram illustrating an information flow of various information pertaining to the license, from the content creator node to the blockchain, according to a non-limiting exemplary embodiment.

According to the present embodiment, a license template is provided by the content creator node (S1501).The content creator node renders the content license template accessible to other nodes - in the present example, this is done by placing the licensing template in the content folder of the creator node file system (S1502), folder which is then replicated by each seeder node that decided to 'pin' the corresponding content, i.e. to advertise through the blockchain the service of transmitting content data to viewer nodes. An individualized viewer node can then obtain the license template, along with the static data, (S1503) using the license template URI part of the content metadata.

The individualized viewer node thus generates the filled license template (S1504). The dynamic part of the license is written into a registry of the blockchain by the individualized viewer node (S1505). This allows limiting the amount of data stored in the blockchain, since using the latter for storing data may be expensive. The amount of dynamic data is preferably maintained as small in size as possible.

According to a non-limiting exemplary embodiment, the individualized viewer node has to provide proof that the license it generated is valid. This is performed by having the individualized viewer node write a proof of licensing into the blockchain for the license it generated and have a seeder node verify that proof (S1506). If the proof is not valid, the verifying seeder node revokes the viewer node by sending an appropriate message to the blockchain (S1507).

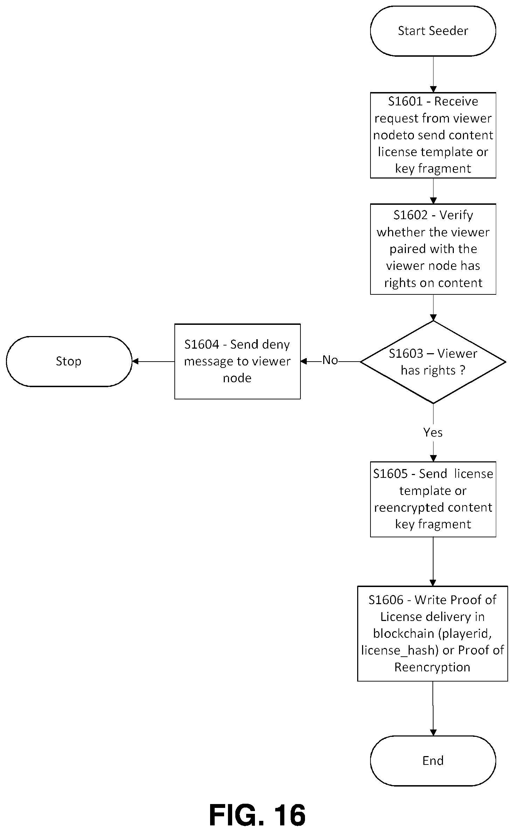

Figure 16 is a flowchart of a process for writing a proof of license template delivery or a proof of reencryption of a key fragment by a seeder node according to a non-limiting exemplary embodiment. A proof of license delivery is written by a seeder node into the blockchain when a license is sent by the seeder node to a viewer node requesting a license. The viewer node can also be referred to as 'player'. A proof of reencryption is written by a seeder node into the blockchain when a key fragment is sent by the seeder to a viewer node requesting a key fragment.

In the process illustrated by figure 16, a request for a content license template or a key fragment is received by a seeder node from a viewer node (S1601). The seeder node then checks in the blockchain whether the viewer paired with the requesting viewer node has a right to the content (S1602, S1603). According to one exemplary non-limiting embodiment, the check comprises verifying that a content token for the desired content is registered in the blockchain as being owned by the viewer paired with the viewer node requesting the license or the key fragment. If the check is negative, a denial message is sent by the seeder node to the requesting viewer node (S1604). If the check is positive, then the seeder node sends the requested content key fragment (after having reencrypted it with the requesting viewer node's public key) or the requested license template (S1605), and writes a corresponding proof of delivery into the blockchain (S1606). If e.g. a license template was sent, then the proof of delivery comprises the identifier of the viewer node and a hash of the license template.

### IX. Proof of Delivery

According to a non-limiting exemplary embodiment, a viewer node having obtained a content or a part thereof determines information characterizing the content or part of content it received - this information is called below a 'proof of delivery' and is sent to a seeder node. The function of this proof is to allow nodes from the peer-to-peer storage network to verify that the content or part of content was properly received. Failed checks are recorded in the blockchain by the nodes having performed the checks. The blockchain may take appropriate action as a consequence of one or more failed checks.

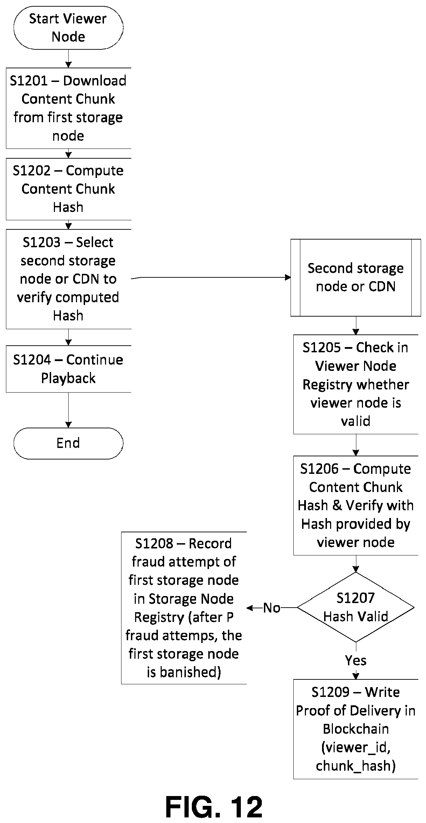

Figure 12 is a flowchart of a content delivery verification process according to a non-limiting exemplary embodiment. A viewer node obtains a content from a first seeder node in the form of chunks. The chunks are preferably obtained in the order of playback by the viewer node. The viewer node first obtains a chunk (S1201). It then computes a hash of this chunk (S1202). The viewer node then selects a second seeder node that stores the chunk for which the hash was computed and sends the hash to the second seeder node, along with an identifier of the chunk (S1203). The second seeder node first checks whether the viewer node it receives the hash from is valid, i.e. whether it is validly registered in a viewer node registry of the blockchain or not (e.g. whether it has been revoked). If the check is positive, the second seeder node computes its own hash of the chunk, based on the chunk identifier it receives, and compares it with the hash received from the viewer node (S1206, S1207). If the check is positive, a proof of delivery is written into the blockchain by the second seeder node (S1209). According to one embodiment, this proof comprises the identifier of the viewer node and the hash of the chunk - the proof certifies that the viewer node did indeed receive a valid chunk. If the check is negative, a counter counting the number of failed checks for the first seeder node is incremented in the blockchain following an appropriate message from the seeder node and if this counter reaches a threshold of P failures, with P being an integer equal or greater than one, the blockchain banishes the first seeder node, as the first seeder node will be considered a fraudulent device (S1208).

### X. Content token acquisition

FIG. 17 is a double flowchart of a content token acquisition process according to a non-limiting exemplary embodiment, seen from the respective point of views of a viewer node and a blockchain node or the blockchain.

From the point of view of the viewer node, an identifier of a seller is first obtained (S 1701) - the seller is a content creator node. The viewer node also obtains a token ID corresponding to the desired content. This information is obtained from the blockchain based on available offers stored therein. The viewer node also approves access to its wallet by the blockchain (S 1702). A request for acquisition of a corresponding content token is then sent to the blockchain (S1703). In response, the blockchain checks the wallet balance of the viewer node (S 1704), transfers the number of utility tokens corresponding to the content price to the seller's wallet (1795), registers the change of ownership of the acquired content token (S1706) and adjusts the number of remaining content tokens (S1707). Lastly, it deletes the offer if no content tokens are remaining (S 1708).

## Claims

1. Method carried out by a device (202, 203, 204) configured to function as a node in a distributed storage network (201) for distributed content storage, said network comprising a plurality of nodes, said device comprising at least one processor and at least one memory with code which when executed by said at least one processor causes the device to carry out the method, said method comprising:
- obtaining (S701, S702) a list of content offers from a blockchain (205);
- selecting (703) a given content for storage by said device among contents identified in said list;
- obtaining said given content from a node of the distributed storage network and storing said content (S707);
- sending (S705) a message to said blockchain for updating a registry with an information indicative that the device stores said given content for the purpose of obtention of said content by at least one user device (210, 211, 212).

2. Method according to claim 1, further comprising:
- receiving a request (S1001) from a user device (210, 211, 212) for obtaining said content;
- verifying (S1002, S1003) with said blockchain whether said user device has a right to receive said content and in the affirmative, delivering said content to said user device.

3. Method according to one of the claims 1 or 2, further comprising :
- broadcasting (S705) a request for said given content to nodes of said storage network;
- obtaining (S706) a response from at least one node storing said content; and
- selecting (S707) one among said at least one node for obtaining said content.

4. Method according to one of the claims 1 to 3, further comprising:
- selecting (S801) a first content among contents stored by said device
- obtaining (S802, S803) the identity of a given node storing said first content from said blockchain;
- performing a check (S804) as to whether the first content is validly stored by said given node and in case it is determined (S809) that the check failed, registering (S810) a corresponding information in the blockchain.

5. Method according to claim 4, wherein performing a check comprises:
- sending (S804) a challenge concerning the first content to said given node;
- receiving a challenge response from said given node comprising a hash of said first content;
- comparing (S808) said received hash with a hash generated by said device based on the content stored by said device;
- determining (S809) that said check failed if the hashes are different.

6. Method according to one of the claims 1 to 5, further comprising:
- receiving (S805) a request from another node of said storage network for responding to a challenge relative the validity of a content stored by said device;
- determining (S807) a response to said challenge and sending (S808) said response to the request.

7. Method according to claim 6, wherein said determining (S807) a response comprises computing a hash of said content for which the challenge response is requested.

8. Method according to one of the claims 1 to 6, wherein said device is a source device for a content other than said given content, said method further comprising registering an offer (S614) for said content other than said given content with said blockchain.

9. Device (202, 203, 204) configured to function as a node in a storage network (201) for distributed content storage, said network comprising a plurality of nodes, said node device comprising at least one processor (301) and at least one memory (302, 304) with code which when executed by said at least one processor causes the device to carry out the method according to one of the claims 1 to 8.

10. Method carried out by a blockchain node device (206, 207, 208) configured to cooperate with other blockchain nodes in a blockchain network (205) comprising at least one processor and at least one memory with code which when executed by the at least one processor causes the blockchain node device to carry out the method, the method comprising:
- receiving an offer for a content from a content source (209);
- registering said offer with an identifier of said content in a first registry for storing offers for contents;
- in response to a request for available contents from a storage node device (202 - 204) of a storage network (201) for distributed content storage, providing a list of contents to said requesting storage node device based on said first registry;
- receiving a message from said storage node device for updating a second registry with an information indicative that the storage node device stores a given content of said list of contents for the purpose of obtention of said given content by at least one user device (210, 211, 212), wherein said second registry is configured to allow identification of on or more storage node devices for a single content.

11. Method according to claim 10, further comprising
- receiving (S813) an information indicative of a failed check by a first storage node of the storage network storing a first content verifying that a second storage node of the storage network indicated in said second registry as storing said first content validly stores said first content;
- in response to the reception of the failed check information, determining (S814) based on a predetermined criterion whether to banish said second storage node and banishing said second storage node is said criterion is met.

12. Method according to claim 11, wherein said criterion consists in checking whether N failed checks have been received, with N being an integer equal or greater than 1.

13. Device (206, 207, 208) configured to function as a blockchain network node in a blockchain network (205), said device comprising at least one processor (301) and at least one memory (302, 304) with code which when executed by said at least one processor causes the device to carry out the method according to one of the claims 10 to 12.
